# EUROPÄISCHE PATENTANMELDUNG

(11) **EP 1 880 979 A2**
(43) Veröffentlichungstag der Anmeldung: **23.01.2008**
(21) Anmeldenummer: 07013690.8
(22) Anmeldetag: 12.07.2007
(51) Int. Cl.: C01G 25/02, C09C 1/00

(54) **Stabile Suspensionen von kristallinen ZrO2-Partikeln aus hydrothermal behandelten Sol-Gel-Vorstufenpulvern**

(30) Priorität: 14.07.2006 DE 102006032759
(71) Anmelder: Fraunhofer-Gesellschaft zur Förderung der angewandten Forschung e.V., 80686 München (DE)
(72) Erfinder: Bockmeyer, Matthias, Dr., 97072 Würzburg (DE); Krüger, Reinhard, Dr., 97082 Würzburg (DE); Guntow, Uwe, Dr., 60325 Frankfurt/M. (DE); Löbmann, Peer, Dr., 97074 Würzburg (DE)
(74) Vertreter: Albrecht, Thomas

(57) **Zusammenfassung**

Beschrieben wird ein Verfahren zur Herstellung von stabilen Suspensionen von fein dispergierten kolloiddispersen kristallinen Zirkondioxid-Partikeln, umfassend die hydrothermale Behandlung von wässrigen molekulardispersen Sol-Gel-Lösungen, die aus amorphen wasserlöslichen Vorstufenpulvern hergestellt worden sind. Die so erhaltenen Suspensionen können u.a. zur Herstellung von dünnen transparenten kristallinen Schichten verwendet werden.

## Beschreibung

Die Erfindung betrifft die Herstellung von stabilen Suspensionen von kristallinen Zirkondioxid-Partikeln, welche in fein dispergierter bzw. kolloiddisperser Form in der Suspension enthalten sind. Die Suspensionen können sowohl zur Herstellung von porösen Schichten als auch als Ausgangsmaterial zur Einbringung von fein dispergierten Zirkondioxid-Nanopartikeln in Werkstoffe eingesetzt werden.

Kristalline kolloiddisperse Systeme sind im Stand der Technik bekannt. Handelsübliche Produkte sind beispielsweise die unter den Handelsbezeichnungen "VP Disp. W 2650" von der Firma Degussa oder "Zirkonoxid Nanopartikel, 5 wt-% Dispersion" von der Firma Aldrich vertriebenen.

Sie können auch zur Herstellung von Zirkondioxidschichten verwendet werden, allerdings sind sie aufgrund der sauren Stabilisierung und/oder ihres Herstellungsprozesses nur bedingt mit amorphen Sol-Gel-Vorstufen mischbar, um stabile Beschichtungslösungen zu erhalten.

Die hydrothermale Behandlung von Sol-Gel-Lösungen in Wasser (z.B. ZrCl₄, ZrOR₄) ist zwar bekannt, resultiert aber, soweit bekannt, nicht in stabilen kolloiddispersen Lösungen. Vorstufen mit Chelatliganden werden nicht eingesetzt. Daher ist ein Herstellungsverfahren von stabilen kristallinen kolloiddispersen ZrO₂-Lösungen über die hydrothermale Behandlung von mit Komplexbildnern, wie z.B. Acetylaceton, stabilisierten Sol-Gel-Vorstufenpulvern nicht bekannt.

Zahlreiche amorphe Sol-Gel-Vorstufen sind für die Herstellung von Zirkonoxidschichten bekannt. Dabei zeigen diese Schichten bei gleicher Transparenz einen nur relativ geringen Grad an Porosität (5 - 20 %). Nicht selten muss bei diesen Schichten aber aufgrund einer Art umschließender Sinterhaut auf der Schicht zwischen offener und geschlossener Porosität unterschieden werden. Über makromolekulare Additive wie Polyethylenglykol (PEG) oder Polyvinylpyrolidon (PVP) kann zwar die Porosität dieser Schichten deutlich erhöht werden, allerdings ist diese Art von Porosität nur auf Risse im µm-Bereich in den Schichten zurückzuführen und nicht auf eine definierte Porenstruktur im Nanometerbereich. Auch führen diese Risse zu einer deutlichen Reduzierung in der optischen Qualität der Schichten, sie werden opak bzw. trüb.

Der Erfindung liegt die Aufgabe zugrunde, eine Suspension zur Beschichtung von Substraten bereitzustellen, mit der die vorgenannten Probleme vermieden werden können. Insbesondere soll durch die Suspension die Herstellung von dünnen transparenten, kristallinen Schichten mit einer großen Oberfläche, Porosität und Kratzfestigkeit insbesondere auf Substraten wie Glas, Keramiken und Metallen ermöglicht werden.

Eine weitere Aufgabe der Erfindung ist die Bereitstellung einer schädigungsfreien Beschichtung von keramischen Fasern.

Eine weitere Aufgabe der Erfindung ist die Bereitstellung von porösen Zirkondioxidschichten als Katalysatoren oder Träger von Katalysatoren.

Eine weitere Aufgabe der Erfindung ist die Bereitstellung eines Verfahrens zur Beschichtung von thermisch empfindlichen Materialien. Ebenfalls bereitgestellt werden sollen Beschichtungen mit antimikrobiellen Eigenschaften, wie sie z.B. in Klimaanlagen im Automobilbereich zur Anwendung kommen.

Eine weitere Aufgabe der Erfindung ist die Bereitstellung von Substraten mit Schichten, die leicht zu reinigen sein sollen und nicht beschlagen, d.h. so genannte "self-cleaning"- Eigenschaften aufweisen.

Eine weitere Aufgabe der Erfindung ist die Bereitstellung von Substraten mit Schichten,die partikelabweisenden Eigenschaften wie z.B. staubabweisend, rußabweisend, aufweisen.

Schließlich soll die Suspension auch zur Beschichtung von Kunststoffen dienen und als Ausgangsmaterial zum Einbringen von fein dispergierten Zirkondioxid-Partikeln in andere Werkstoffe verwendbar sein, z.B. in Kunststoffe, um den Brechungsindex zu erhöhen oder die Abrasionsbeständigkeit zu erhöhen.

Diese Aufgaben werden gemäß einem ersten Aspekt der Erfindung gelöst durch ein Verfahren zur Herstellung von stabilen Suspensionen von fein dispergierten kolloiddispersen kristallinen Zirkondioxid-Partikeln, umfassend die hydrothermale Behandlung von wässrigen molekulardispersen Sol-Gel-Lösungen, die aus amorphen wasserlöslichen Vorstufenpulvern hergestellt worden sind.

Die mit dem erfindungsgemäßen Verfahren hergestellten Suspensionen sind langzeitstabil, d.h. über einen Zeitraum von mindestens einem halben Jahr verwendbar.

Die Herstellung der erfindungsgemäßen kolloiddispersen Suspensionen erfolgt über die hydrothermale Behandlung von wässrigen molekulardispersen Sol-Gel-Lösungen, wobei hierunter die Kristallisation der Zirkonoxid-Partikel aus hoch erhitzten wässrigen Lösungen (Hydrothermalsynthese) verstanden wird, d.h. die in dem erfindungsgemäßen Verfahren verwendete Lösung weist eine Temperatur oberhalb des Siedepunkts von Wasser bei Normaldruck auf. Entsprechend bedingt die hydrothermale Behandlung die Verwendung von Druckgefäßen (Autoklaven).

Dabei wird zunächst das Vorstufenpulver in einer Menge von ≤ 30 Gew.-%, vorzugsweise ≤ 20 Gew.-%, bezogen auf ZrO₂ in Wasser oder einem wässrigen Lösungsmittel gelöst.

Geeignete wässrige Lösungsmittel sind Gemische aus Wasser und einem organischen Lösungsmittel, ausgewählt aus der Gruppe, bestehend aus Alkoholen, Diolen, Diolethern und Aminen.

Weitere bevorzugte Lösungsmittel sind Carbonsäuren.

Bei dem erfindungsgemäßen Verfahren wird die hydrothermale Behandlung üblicherweise bei einer Temperatur im Bereich von 120 - 250 °C durchgeführt. Besonders bevorzugt ist ein Temperaturbereich von 160 - 180 °C.

Die Behandlungsdauer beträgt im Allgemeinen 1 - 48 h und vorzugsweise 16 - 24h.

Der Druck stellt sich im oben angegebenen Temperaturbereich automatisch auf ca. 5 bar ein.

Zweckmäßigerweise wird das nach der hydrothermalen Behandlung erhaltene Produkt in einem Medium, ausgewählt aus Ethanol aufgenommen und filtriert. Hierzu kann beispielsweise eine Druckfiltrationsapparatur mit einer Porengröße im Bereich von 0,45 µm verwendet werden.

Als amorphes wasserlösliches Vorstufenpulver eignet sich zur Verwendung in dem erfindungsgemäßen Verfahren insbesondere ein Vorstufenpulver wie es in der europäischen Patentanmeldung EP 1 084 992 A1 beschrieben ist. Dieses wird hergestellt durch
(a) Umsetzung eines Zirkonalkoholats der allgemeinen Formel Zr(OR)₄, in der die Reste R gleich oder verschieden sind und geradkettige, verzweigte oder cyclische Alkyl- oder Alkenylreste mit 1 bis 10 Kohlenstoffatomen darstellen, die gegebenenfalls ein oder mehrere Carbonyl- und/oder Ester-und/oder Carboxylfunktionen aufweisen, mit einer oder mehreren polaren Verbindungen mit komplexierenden, chelatisierenden Eigenschaften,
(b) Erhitzen der Lösung,
(c) Versetzen der Lösung mit Wasser, gegebenenfalls in Anwesenheit eines Katalysators,
(d) Einengen der Lösung bis zum Erhalten eines Pulvers.

Gemäß einer bevorzugten Ausführungsform wird das Zirkonalkoholat vorgelegt und die polare Verbindung zugegeben (vorzugsweise zugetropft).

Gemäß einer bevorzugten Ausführungsform dieses Verfahrens werden Zirkonalkoholate der allgemeinen Formel Zr(OR)₄ eingesetzt, in der R für einen geradkettigen oder verzweigten Alkylrest mit 2 bis 6 Kohlenstoffatomen steht. Des Weiteren ist es bevorzugt, wenn sich einer oder mehrere Reste OR der vorgenannten Formel von Oxoestern, β-Diketonen, Carbonsäuren, Ketocarbonsäuren oder Ketoalkoholen ableiten. Besonders bevorzugt ist es, wenn sich der Rest OR von Acetylaceton ableitet. Beispiele für geeignete Zirkonalkoholate sind Zr(OEt)₄, Zr(Oi-Pr)₄, Zr(On-Pr)₄ und Zr(AcAc)₂(Oi-Pr)₂.

Als polare, komplexierende und chelatisierende Verbindung werden vorzugsweise Diketone, β-Ketoester, Acetylaceton, Glykolether, Diole, mehrwertige Alkohole, Aminoalkohole, Glycerin, Hydroxydiole, Aminothiole, Dithiole, Diamine, Carbonsäuren oder Mischungen derselben eingesetzt.

Besonders bevorzugt ist die Verwendung von Diketonen, insbesondere von 1,3-Diketonen, wie Acetylaceton.

Die polare komplexierende und chelatisierende Verbindung wird in einer Menge von 0,5 bis 20 mol, vorzugsweise 0,5 bis 3 mol/mol Zirkonalkoholat eingesetzt.

Nach der Umsetzung des Zirkonalkoholats mit der polaren komplexierenden und chelatisierenden Verbindung wird die erhaltene Lösung auf eine Temperatur im Bereich von Raumtemperatur bis Siedepunkt des Lösungsmittels, vorzugsweise auf 80 bis 100°C über einen Zeitraum bis zu 24 Stunden, vorzugsweise über einen Zeitraum von 0,5 bis 2 Stunden, erhitzt.

Dotierungen wie Yt³⁺, Mg²⁺, Ca²⁺, Ce²⁺ können nach diesem Syntheseschritt in Form ihrer Salze z.B. als Acetate, Chloride, Nitrate, Acetylacetonate dem Syntheseansatz in entsprechender Stöchiometrie hinzu gegeben werden.

Anschließend versetzt man die Lösung mit einer Menge von 0,5 bis 20, vorzugsweise 1 bis 3 mol H₂O pro Mol Zirkonalkoholat, gegebenenfalls in Gegenwart eines Katalysators (H₃O⁺, OH⁻) bzw. verdünnten anorganischen oder organischen Säuren oder Laugen, wie HNO₃, HCl, p-Toluolsulfonsäure, Carbonsäuren (Ethoxyessigsäure, Methoxyessigsäure), NaOH oder NH₃, bzw. verdünnten Lösungen von Metallsalzen, wie NaBF₄. Dotierungen wie Yttrium, Magnesium, Calcium, Cerium, Scandium etc. können ebenfalls in Form ihrer Salze z.B. als Acetate, Chloride, Nitrate, Acetylacetonate dem Syntheseansatz in entsprechender Stöchiometrie hinzu gegeben werden.

Anschließend engt das Gemisch vorzugsweise unter reduziertem Druck ein. Dabei wird ein pulverförmiger Feststoff erhalten, der einen Zirkonoxidgehalt von 30 bis 60 Gew.-% aufweist.

Das Pulver ist unbegrenzt an Luft lagerfähig.

Wie bereits erwähnt, kann dieses Pulver dann in Wasser oder wässrigen Lösungsmitteln zur Herstellung einer wässrigen molekulardispersen Sol-Gel-Lösung gelöst werden. Diese wird dann, wie voranstehend beschrieben, einer hydrothermalen Behandlung unterzogen.

Die Partikelgröße bzw. Agglomeratgröße der dadurch erhaltenen kolloiddispersen erfindungsgemäßen Lösungen kann dabei durch den pH-Wert gesteuert werden, der bei der Hydrolyse zur Herstellung des amorphen wasserlöslichen Vorstufenpulvers eingestellt wird. Unter gleichen Bedingungen liefern niedrige pH-Werte dabei geringere Partikel- bzw. Agglomeratgrößen.

Des Weiteren ist die Partikelgröße bzw. Agglomeratgröße abhängig von der Wahl und Konzentration des Reagenzes zur sauren Hydrolyse bei der Vorstufenpulversynthese.

Schließlich hat auch das Verhältnis von Zirkonalkoholat zu Komplexbildner und Wasser einen Einfluss auf die Partikelgröße bzw. Agglomeratgröße der kolloiddispersen erfindungsgemäßen Suspensionen.

Des Weiteren können den Sol-Gel-Lösungen, die aus den amorphen wasserlöslichen Vorstufenpulvern hergestellt werden, kationische Tenside wie beispielsweise CTAB und neutrale Tenside (Blockcopolymere) zugesetzt werden. Solche Tenside können in einer Menge von ≤ 10 Gew.-% hinzugesetzt werden und beeinträchtigen die Stabilität der wässrigen Vorstufenpulverlösungen nicht. Der Zusatz von Tensiden bewirkt eine Mizellenbildung, über die eine Strukturierung der Zirkondioxid-Partikel während der hydrothermalen Behandlung möglich ist.

Es können sowohl reine Zirkonoxid-Vorstufenpulver, wie aber auch Yttrium-, Calcium-, Magnesium-, Cer- und Scandium-dotierte Vorstufenpulver eingesetzt werden und resultieren ebenfalls in stabilen Suspensionen mit nanokristallinen Partikeln.

Nach der hydrothermalen Behandlung werden die erfindungsgemäßen Suspensionen von Zirkondioxid-Partikeln erhalten, die noch etwa 10-15% funktionelle organische Gruppen enthalten, die aus den zur Synthese der Vorstufenpulver eingesetzten Zirkonalkoholaten herrühren. Diese organischen Bestandteile zersetzen sich erst bei einer Pyrolysetemperatur von etwa 300°C.

Die durch das voranstehend beschriebene Verfahren hergestellten Suspensionen, die ebenfalls Gegenstand der vorliegenden Erfindung sind, können sowohl zur Herstellung von porösen Schichten als auch als Ausgangsmaterial für das Einbringen von fein dispergierten Zirkondioxid-Nanopartikeln in Werkstoffe eingesetzt werden. Die Herstellung von porösen Schichten erfolgt beispielsweise durch Eintauchen der zu beschichtenden Substrate in die erfindungsgemäßen Suspensionen (und anschließendes Trocknen des tauchbeschichteten Substrats), wobei über den gesamten Temperaturbereich 100 -1700 °C rissfreie Schichten mit Schichtdicken von 10 - 500 nm erhalten werden. Die Porosität (XRR) liegt bei 550°C bei ~ 50%, bei 1000°C bei ~ 35% und bei 1150°C bei ~ 10%.

Durch den Einsatz von Mischungen aus amorphen molekulardispersen Partikeln und kolloiddispersen Partikeln lassen sich nach Belieben Schichten mit definierten Porositäten (50-5% Restporosität) und definierten Porenradien 25 nm bis 4 nm einstellen.

Solche amorphe molekulardisperse Partikel bestehen beispielsweise aus TiO₂, ZrO₂, SiO₂, Al₂O₃, Perowskiten, Pyrochlorverbindungen und weiteren oxidischen Verbindungen, deren Herstellung in "Nanoparticles: From Theory to Application. Edited by Günter Schmid, 2004 Wiley-VCH Verlag GmbH & Co. KGaA, Weinheim" beschrieben wird. Sie werden der erfindungsgemäßen Suspension in Mengen von 1 - 99 % zugesetzt, so dass Porositäten im Bereich von 5 - 50 % Restporosität und Porenradien im Bereich von 20 nm bis 1 nm erhalten werden können.

Ein weiterer Vorteil des erfindungsgemäßen Verfahrens bzw. der erfindungsgemäßen Suspension ist der Umstand, dass die Ausgangsverbindungen kommerziell verfügbar und nicht giftig sind. Die Reaktionen verlaufen in einem einzigen Gefäß und das in der EP 1 084 992 A1 beschriebene Sol-Gel-Vorstufenpulver - wie es in dem erfindungsgemäßen Verfahren verwendet werden kann - ist unbegrenzt an Luft lagerfähig.

Ebenso langzeitstabil sind die daraus hergestellten erfindungsgemäßen kolloiddispersen Suspensionen bzw. Lösungen bzw. die Mischungen aus molekulardispersen und kolloiddispersen Partikeln.

Wie bereits erwähnt, lassen sich über das Vorstufenpulver auch in einfacher Weise Dotierungen in die Partikel einbringen.

Aus ihnen sind mittels Tauchbeschichtung defektfreie Schichten von hoher optischer Homogenität und gleichbleibender Qualität herstellbar. Die Lösungen bieten den Vorteil, gezielt die Mikrostruktur wie Porenvolumen, Porenradien und innere Oberfläche von dünnen ZrO₂-Schichten einstellen zu können. Hierdurch bieten sie im Gegensatz zum heutigen technischen Stand die Möglichkeit, für zahlreiche Anwendungen die Schichteigenschaften gezielt anpassen zu können.

Durch die Mischbarkeit mit molekulardispersen amorphen Sol-Gel-Vorstufen lassen sich weiterhin nicht nur mikrostrukturelle Eigenschaften anpassen, sondern es kann auch gezielt die Kratzfestigkeit von porösen ZrO₂-Schichten deutlich erhöht werden bei gleichzeitig nur geringem Verlust an Porosität.

Durch die bereits kristallin vorliegenden Partikel können kristalline Schichten mit vergleichsweise niedrigen Sintertemperaturen im Gegensatz zu klassischen Sol-Gel-Beschichtungen hergestellt werden.

Zusammenfassend lässt sich feststellen, dass das Vorliegen von fein dispergierten Zirkondioxid-Partikeln in der erfindungsgemäßen Suspension die folgenden technischen Anwendungen eröffnet:
(i) Herstellung von dünnen transparenten, kristallinen Schichten mit einer großen Oberfläche, Porosität und Kratzfestigkeit auf Glas, Keramiken und Metallen.
(ii) Herstellung von schädigungsfreien Beschichtungen von keramischen Fasern.
(iii) Herstellung von porösen Zirkondioxidschichten als Katalysatoren oder Träger von Katalysatoren.
(iv) Beschichtung von thermisch empfindlichen Materialien.
(v) Beschichtungen mit antimikrobiellen Eigenschaften, z.B. Klimaanlagen im Automobilbereich.
(vi) Beschichtung von Kunststoffen.
(vii) Ausgangsmaterial für fein dispergierte Nanopartikel zum Einbringen in andere Werkstoffklassen, z.B. Kunststoffe um den Brechungsindex zu erhöhen.
(viii) Beschichtungen mit "self-cleaning" Eigenschaften.
(ix) Beschichtungen mit "partikelabweisenden Eigenschaften (z.B. staubabweisend, rußabweisend)

Die Erfindung wird durch das nachstehende Ausführungsbeispiel näher erläutert:

### Beispiel:

### Vorstufenpulversynthese:

In einem 2-I-Rundkolben werden 1,5 mol Zirkontetraethylat vorgelegt und anschließend unter Rühren 1 mol Acetylaceton über einen Tropftrichter hinzugetropft. Die Lösung wird eine Stunde rühren gelassen und mit 3 mol Wasserhydrolysiert. Alle flüchtigen Bestandteile werden anschließend am Rotationsverdampfer bei 80°C Badtemperatur entfernt. Typische Oxidgehalte liegen bei ~ 55 wt-%.

### Hydrothermale Behandlung:

In einem 500-ml-Schraubdeckelglas wird ein 12-Masse-%-ZrO₂-Sol ausgehend vom vorherbeschriebenen wasserlöslichen Zirkondioxidvorstufenpulver hergestellt. Hierzu werden 109,1 g des Vorstufenpulver (55 Masse-%) auf 390,9 g Wasser eingewogen und anschließend 24 h heftig gerührt. Nachdem eine klare rote Lösung entstanden ist, werden von dieser Lösung 400 g in ein 500-ml-Teflongefäß überführt und anschließend in einer Metallbombe verschlossen, für 24 h bei 160°C hydrothermal behandelt. Die resultierende Suspension wird anschließend mit 400 g Ethanol versetzt und mittels einer Druckfiltrationsapparatur (0,45 µm) filtriert.

Mit der so hergestellten erfindungsgemäßen 6-Gew.%igen Lösung können nun 200 nm dicke, poröse Schichten mittels Tauchbeschichtung (Ziehgeschwindigkeit: 20 cm/min) hergestellt werden. Werden die Nassfilme bei 600 °C für zehn Minuten ausgelagert, so können Zirkondioxidschichten mit einer Porosität von - 40 % und einer Oberfläche von - 70 m²/g erhalten werden.

## Patentansprüche

1. Verfahren zur Herstellung von stabilen Suspensionen von fein dispergierten kolloiddispersen kristallinen Zirkondioxid-Partikeln, umfassend die hydrothermale Behandlung von wässrigen molekulardispersen Sol-Gel-Lösungen, die aus amorphen wasserlöslichen Vorstufenpulvern hergestellt worden sind.

2. Verfahren nach Anspruch 1, **dadurch gekennzeichnet, dass** man die molekulardisperse Sol-Gel-Lösung herstellt, indem das Vorstufenpulver in einer Menge von ≤ 20 Gew.% bezogen auf ZrO₂ in Wasser oder in einem wässrigen Lösungsmittel löst.

3. Verfahren nach Anspruch 2, **dadurch gekennzeichnet, dass** man als wässriges Lösungsmittel ein Gemisch aus Wasser und einem organischen Lösungsmittel, ausgewählt aus der Gruppe, bestehend aus Alkoholen, Diolen, Diolethern und Aminen, verwendet.

4. Verfahren nach Anspruch 3, **dadurch gekennzeichnet, dass** man als Lösungsmittel ein Gemisch aus Propandiol, Trietholamin und Wasser verwendet.

5. Verfahren nach Anspruch 1, **dadurch gekennzeichnet, dass** man die hydrothermale Behandlung bei einer Temperatur im Bereich von 120-250 °C durchführt.

6. Verfahren nach Anspruch 1, **dadurch gekennzeichnet, dass** man die hydrothermale Behandlung über eine Zeit im Bereich von 1-48 h durchführt.

7. Verfahren nach Anspruch 1, **dadurch gekennzeichnet, dass** man die hydrothermale Behandlung bei einem Druck im Bereich von 2 bis 10 bar durchführt.

8. Verfahren nach Anspruch 1, **dadurch gekennzeichnet, dass** man das nach der hydrothermalen Behandlung erhaltene Produkt mit Ethanol versetzt und filtriert.

9. Verfahren nach Anspruch 1, **dadurch gekennzeichnet, dass** man als amorphes wasserlösliches Vorstufenpulver ein Pulver verwendet, das erhältlich ist durch
(a) Umsetzung eines Zirkonalkoholats der allgemeinen Formel Zr(OR)₄, in der die Reste R gleich oder verschieden sind und geradkettige, verzweigte oder cyclische Alkyl- oder Alkenylreste mit 1 bis 10 Kohlenstoffatomen darstellen, die gegebenenfalls ein oder mehrere Carbonyl- und/oder Ester- und/oder Carboxylfunktionen aufweisen, mit einer oder mehreren polaren Verbindungen mit komplexierenden, chelatisierenden Eigenschaften,
(b) Erhitzen der Lösung,
(c) Versetzen der Lösung mit Wasser, gegebenenfalls in Anwesenheit eines Katalysators,
(d) Gegebenfalls Zusatz einer Metallionendortierung
(e) Einengen der Lösung bis zum Erhalten eines Pulvers.

10. Verfahren nach Anspruch 9, **dadurch gekennzeichnet, dass** das Zirkonalkoholat vorgelegt und die polare Verbindung zugegeben wird.

11. Verfahren nach Anspruch 9 oder 10, **dadurch gekennzeichnet, dass** man als polare Verbindung mit komplexierenden, chelatisierenden Eigenschaften Diketone, β-Ketoester, Acetylaceton, Glykolether, Diole, mehrwertige Alkohole, Aminoalkohole, Glycerin, Hydroxydiole, Aminothiole, Dithiole, Diamine, Carbonsäuren oder Mischungen derselben verwendet.

12. Verfahren nach Anspruch 11, **dadurch gekennzeichnet, dass** man als polare Verbindung mit komplexierenden, chelatisierenden Eigenschaften Acetylaceton verwendet.

13. Stabile Suspension von kristallinen Zirkondioxid-Partikeln, erhältlich durch das Verfahren nach den Ansprüchen 1 bis 12.

14. Suspension nach Anspruch 13, **dadurch gekennzeichnet, dass** die Suspension die Partikel in einer Menge von 1-25 Gew. % enthält.

15. Suspension nach Anspruch 13, **dadurch gekennzeichnet, dass** das Suspensionsmittel ausgewählt ist aus der Gruppe, bestehend aus Alkoholen, Carbonsäuren und weiteren polaren und apolaren Lösungsmitteln.

16. Suspension nach Anspruch 13, **dadurch gekennzeichnet, dass** die Primärpartikelgröße der Zirkondioxid-Partikel im Bereich von 4-15 nm liegt.

17. Suspension nach Anspruch 13, **dadurch gekennzeichnet, dass** die Größe der Agglomerate aus den Zirkondioxid-Partikeln im Bereich von 5 - 150 nm liegt.

18. Suspension nach Anspruch 13, **dadurch gekennzeichnet, dass** die Zirkondioxid-Partikel funktionelle organische Gruppen in einer Menge von 5 - 15 Gew.% aufweisen.

19. Suspension nach Anspruch 13, **dadurch gekennzeichnet, dass** sie weiterhin amorphe molekulardisperse Partikel enthalten können.

20. Verwendung der Suspension nach den Ansprüchen 13 bis 18 zur Herstellung von dünnen transparenten kristallinen Schichten auf einem Substrat.

21. Verwendung nach Anspruch 20, **dadurch gekennzeichnet, dass** das Substrat ausgewählt ist aus der Gruppe, bestehend aus Glas-, Keramik-, Metall- und Kunststoffsubstraten.

22. Verwendung nach Anspruch 20, **dadurch gekennzeichnet, dass** das Substrat thermisch empfindlich ist.

23. Verwendung der Suspension nach den Ansprüchen 13 bis 19 als Ausgangsmaterial für das Einbringen von Zirkondioxid-Partikeln in Werkstoffe.

24. Verwendung der Suspension nach den Ansprüchen 13 bis 19 zur Herstellung von porösen Zirkondioxidschichten als Katalysatoren oder Träger von Katalysatoren.

25. Verwendung der Suspension nach den Ansprüchen 13 bis 19 zur schädigungsfreien Beschichtung von keramischen Fasern.

26. Verwendung der Suspension nach den Ansprüchen 13 bis 19 zur Herstellung von porösen Zirkondioxidschichten als selbst-reinigende Schichten.

27. Verwendung der Suspension nach den Ansprüchen 13 bis 19 zur Herstellung von porösen Zirkondioxidschichten als schmutzabweisende Schichten.
